# FASCICULE DE BREVET EUROPEEN

(11) **EP 3 636 057 B1**
(45) Date de publication et mention de la délivrance du brevet: **02.08.2023**
(21) Numéro de dépôt: 19202240.8
(22) Date de dépôt: 09.10.2019
(51) Int. Cl.: A01B 29/04

(54) **PNEUMATIQUE DE ROULEAU AGRICOLE**
WALZENREIFEN FÜR LANDWIRTSCHAFT
TYRE FOR AGRICULTURAL ROLLER

(30) Priorité: 12.10.2018 FR 1859501
(43) Date de publication de la demande: 15.04.2020
(73) Titulaire: OTICO, 77650 Chalmaison (FR)
(72) Inventeur: PHELY, Olivier, 77520 Thénisy (FR)
(74) Mandataire: Cabinet Netter

(56) Documents cités:
- EP-A1- 0 379 672
- EP-A1- 2 730 155
- EP-A1- 3 114 916
- EP-A2- 0 380 020

## Description

L'invention concerne un pneumatique pour rouleau agricole, et un rouleau équipé de pneumatiques de ce type.

Pour travailler les champs, on utilise couramment un rouleau comprenant un support tubulaire, généralement cylindrique, et une pluralité de pneumatiques montés les uns à côté des autres sur le support. Lorsqu'on déplace le rouleau à travers champ, chaque pneumatique y travaille selon un sillon respectif. Selon le profil des pneumatiques qui l'équipent, le rouleau peut être utilisé par exemple pour former les sillons ou rappuyer ce sol.

Chaque pneumatique comprend classiquement une enveloppe souple, avec une allure de révolution, délimitant une chambre non gonflable. L'enveloppe souple présente un fourreau cylindrique par l'intermédiaire duquel le pneumatique s'enfile autour du support. Le fourreau comprend une paire de bords latéraux, s'étendant radialement, qui portent chacun une surface de jonction par l'intermédiaire de laquelle le pneumatique s'appuie contre la surface de jonction d'un pneumatique homologue du rouleau. L'enveloppe comprend aussi une bande de roulement reliée au fourreau et destinée à venir au contact du sol.

Des pneumatiques de ce type sont connus par exemple de FR 2 784 331 et FR 3 038 490 au nom de la Demanderesse, ou bien par exemple de EP2730155A1 et EP3114916A1. Ces pneumatiques ont la propriété d'être d'autonettoyants, c'est-à-dire qu'ils sont capables, par eux-mêmes, d'empêcher l'accumulation de terre ou de permettre à cette terre de se décoller. Cette propriété résulte de la souplesse de leur enveloppe et d'une chambre non gonflée qui permet à l'enveloppe de se déformer lorsque le pneumatique travaille. Cette déformation concerne pour l'essentiel la bande de roulement. Entre les bandes de roulement de deux pneumatiques mutuellement adjacents se trouve une zone où la terre tend à s'accumuler, malgré le caractère déformable de ces bandes de roulement. On a alors recours à des grattoirs ou analogue pour nettoyer ces zones.

L'invention vise à améliorer la situation grâce à un pneumatique de rouleau agricole selon la revendication 1.

On propose un pneumatique de rouleau agricole du type comprenant une enveloppe souple délimitant une chambre non gonflable, l'enveloppe souple présentant un fourreau propre à s'adapter autour d'un tube support et possédant une paire de bords latéraux portant chacun une surface de jonction à un pneumatique homologue, ainsi qu'une bande de roulement reliée au fourreau.

La chambre s'étend à proximité de chacun des bords latéraux de manière généralement homologue à la surface de jonction, de sorte que les bords latéraux présentent une épaisseur sensiblement constante du fourreau à la bande de roulement. L'enveloppe présente au moins une paire de portions faisant saillie radialement dans la chambre. Ces portions en saillie sont proches chacune d'un bord latéral respectif.

Le pneumatique proposé présente une chambre non gonflable qui s'approche au plus près de ses bords latéraux. Contrairement aux pneumatiques qui équipent les rouleaux agricoles classiques, qui présentent des bords latéraux renforcés, en particulier avec une épaisseur de matière plus importante là où les bords latéraux se raccordent au fourreau, le pneumatique proposé présente des bords latéraux d'épaisseur sensiblement constante.

Du fait de cette épaisseur constante, et potentiellement réduite en comparaison des pneumatiques des rouleaux classiques, les bords latéraux du pneumatique proposé sont souples, le cas échéant pratiquement aussi souples que leur bande de roulement. Ces bords latéraux sont capables de se déformer en accompagnant la déformation de la bande de roulement. C'est ainsi toute la bande de roulement, d'un bord latéral du pneumatique à l'autre, qui peut se déformer et ainsi se nettoyer. Les portions en saillies à l'intérieur de la chambre, proches des bords latéraux, agissent à la manière de butées lorsque la bande de roulement se déforme. Ces portions limitent l'étendue de la déformation de la bande de roulement, dans la direction radiale, au voisinage des bords latéraux. La déformation de ces bords latéraux se trouve en conséquence limitée. Le pneumatique conserve ses performances de travail tout en présentant une capacité accrue à se nettoyer.

On propose également un rouleau agricole comprenant un support généralement tubulaire et une pluralité de pneumatiques du type proposé ci-dessus, montée sur ce support.

D'autres caractéristiques et avantages de l'invention apparaîtront à l'examen de la description détaillée ci-après, et des dessins annexés sur lesquels :
- la figure 1 montre une portion de rouleau agricole selon l'invention, équipé de pneumatiques, vue en coupe longitudinale ;
- la figure 2 montre une portion d'un pneumatique de la figure 1, vue en coupe radiale ;
- la figure 3 est analogue à la figure 1, les pneumatiques se trouvant dans un premier état de contraintes ;
- la figure 4 est analogue à la figure 3, les pneumatiques se trouvant dans un second état de contraintes ;
- la figure 5 montre une portion d'une variante de pneumatique à usage dans le rouleau de la figure 1, vue en coupe radiale ;
- les figures 6 à 8 montrent un rouleau sillonneur classique selon l'état de la technique, dans des vues analogues aux figures 1, 3 et 4 respectivement ;
- la figure 9 montre une autre variante encore d'un pneumatique à usage dans le rouleau de la figure 1, vue en demi-coupe radiale ; et
- la figure 10 montre la variante de pneumatique de la figure 9 en perspective isométrique.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

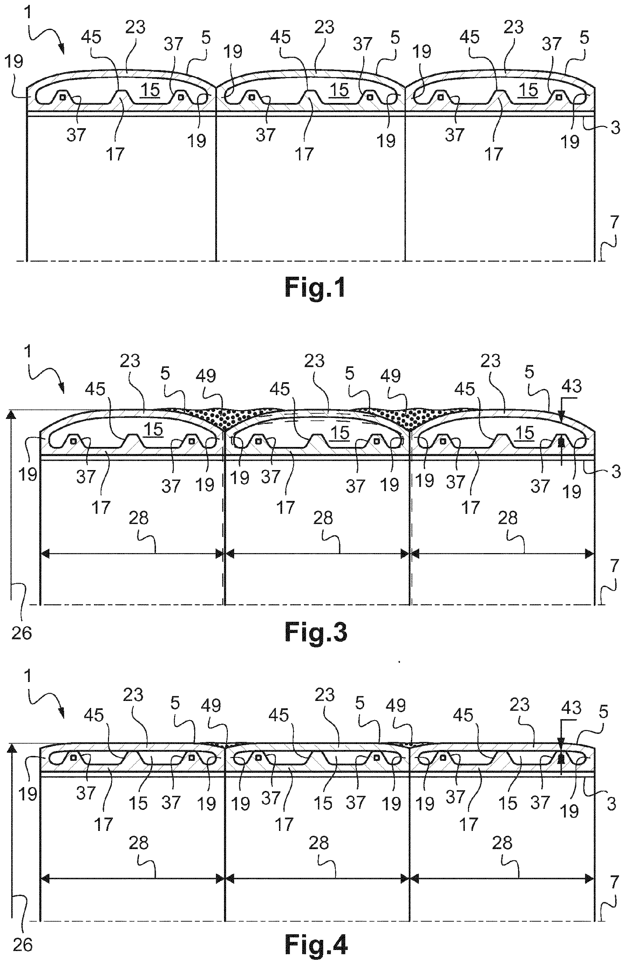

On fait référence à la figure 1.

Elle montre un segment d'un rouleau agricole 1, ici à usage pour rappuyer le sol. Le rouleau 1 comprend un support tubulaire 3 généralement cylindrique et une pluralité de pneumatiques 5 homologues, qui sont enfilés autour du support tubulaire 3 de façon jointive. Les pneumatiques 5 sont empilés les uns contre les autres selon la direction longitudinale du support 3. Les pneumatiques 5 sont répartis longitudinalement d'une manière qui correspond à ce que l'on appelle l'entre-rang dans la technique, c'est-à-dire l'écartement entre deux sillons adjacents.

Le rouleau 1 est destiné à être monté à rotation autour de l'axe 7 du support 3, typiquement sur le châssis d'une machine agricole (non représentée).

Chaque pneumatique 5 présente une forme générale de révolution autour d'un axe central. Chaque pneumatique 5 se monte sur le support 3 de manière centrée, c'est-à-dire que l'axe central du pneumatique 5 coïncide avec l'axe 7 du support 3.

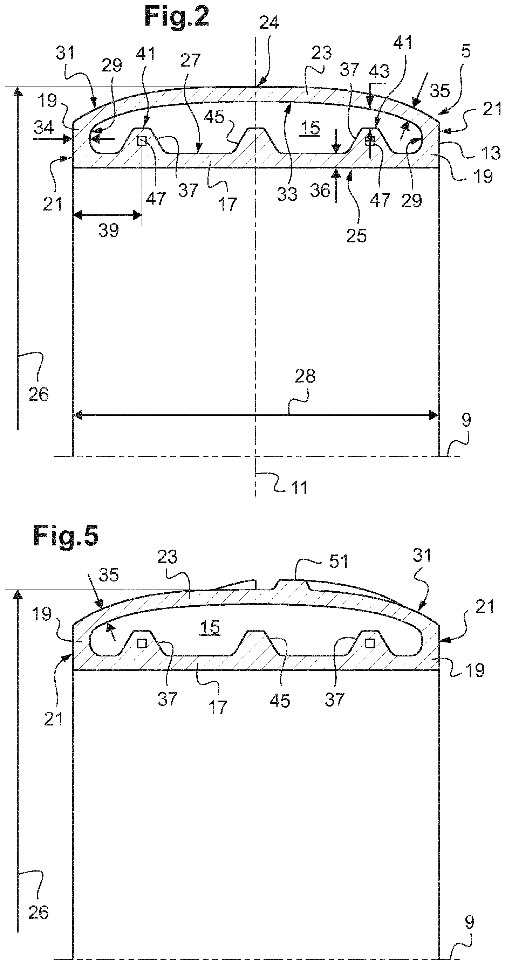

On fait référence à la figure 2.

Elle montre le profil d'un pneumatique 5, c'est-à-dire le pneumatique 5 vu en coupe selon un plan radial comprenant l'axe central 9 de ce pneumatique 5. Le pneumatique 5 y est représenté tel qu'il se trouve en l'absence de sollicitation extérieure (libre de contrainte).

Le pneumatique 5 présente un plan médian 11 orthogonal à son axe central 9. Le pneumatique 5 présente une allure généralement symétrique par rapport à son plan médian 11.

Le pneumatique 5 est de type semi-creux. Il comprend une enveloppe 13 constituée d'un bandage, ou d'une peau. Cette enveloppe 13 est venue de matière et constituée d'un matériau souple, typiquement un caoutchouc naturel, un ou plusieurs élastomères, tels que le polyuréthane par exemple, ou encore un mélange de caoutchouc naturel et d'élastomère. Par exemple, le matériau souple présente une dureté Shore A comprise entre 50 et 70.

L'enveloppe 13 présente une allure de révolution autour de l'axe central 9 et occupe la circonférence du pneumatique 5. Cette enveloppe 13 délimite une chambre 15 non gonflable qui rend l'enveloppe 13 déformable. L'enveloppe 13 admet le plan médian 11 du pneumatique 5 en tant que plan médian et de symétrie.

L'enveloppe 13 comprend une portion formant fourreau 17 généralement cylindrique. Le fourreau 17 est propre à s'adapter autour d'un support, typiquement le support tubulaire 3 de la figure 1. Le fourreau 17 se termine axialement par une paire de bords latéraux 19 mutuellement opposés qui s'étendent radialement, c'est-à-dire perpendiculairement à l'axe 9 du pneumatique 5. Les bords 19 sont généralement circulaires. Ces bords 19 portent chacun une surface axialement extérieure 21, laquelle s'étend ici radialement. Cette surface extérieure 21 est ici annulaire et plane, au moins en l'absence de sollicitation extérieure de l'enveloppe 13. Dans le rouleau 1, la surface extérieure 21 de chaque bord 19 est destinée à venir s'appuyer contre une surface homologue qui peut être, selon la position du pneumatique 5 dans l'empilement :
- la surface extérieure 21 de l'un des bords 19 d'un pneumatique homologue, adjacent au pneumatique 5 sur le support 3 - elle forme alors une surface de jonction et les surfaces extérieures 21 en appui mutuel forment ce que l'on appelle un "joint",
- une face d'une entretoise montée sur le support 3 de manière adjacente au pneumatique 5, ou
- une face d'un flasque monté en extrémité de ce support 3.

Par exemple, la hauteur des bords 19, qui correspond à la demi différence entre leur diamètre extérieur et leur diamètre intérieur est voisine de 30 millimètres.

L'enveloppe 13 comprend en outre une partie formant bande de roulement 23 qui se rattache à chacun des bords 19. La bande 23 est généralement cylindrique et coaxiale au fourreau 17. La bande 23 présente ici un profil en dôme peu accentué, d'un bord 19 à l'autre. La bande 23 présente un profil légèrement galbé. Ce profil de la bande 23 présente un sommet 24 qui se trouve dans le plan médian 11 de l'enveloppe 13. Le sommet 4 correspond à la partie de la bande 23 la plus éloignée radialement de l'axe 9 du pneumatique 5. Le sommet 24 se trouve à une distance 26 de l'axe 9 du pneumatique 5 qui correspond au diamètre extérieur du pneumatique 5 en l'absence de sollicitation extérieure, ou diamètre OD0.

La bande 23 s'étend ici de manière continûment bombée, d'un bord 19 à l'autre, sans rupture dans son profil. Ici, le profil général de la bande 23 est dépourvu de portion saillante, comme une portion en forme de crête par exemple et/ou d'épaulement. La bande 23 s'étend selon un profil dont la concavité est de même signe d'un bord 19 à l'autre, y compris ici au voisinage de la surface extérieure 21 des bords 19. L'enveloppe 13 est dépourvue de semelle. Le fourreau 17 se termine axialement au droit des bords 19. Le fourreau 17 ne s'étend pas axialement au-delà des bords 19.

En travail, lorsque le rouleau 1 se déplace sur le sol, la bande 23 des pneumatiques 5 crée des sillons peu profonds, dont la distance les uns aux autres correspond à l'écartement des sommets 24 des pneumatiques 5 dans la direction axiale.

Le fourreau 17 présente une surface extérieure 25 en correspondance de forme avec la surface extérieure du support du rouleau auquel elle est destinée, par exemple le support 3 de la figure 1. Ici, cette surface extérieure 25 est généralement cylindrique, et son axe correspond à l'axe 9 du pneumatique 5. Lorsque le pneumatique 5 est monté sur un support, la surface extérieure 25 du fourreau 17 est en contact surfacique avec la surface extérieure de ce support. La surface extérieure 25 présente un diamètre qui correspond au diamètre intérieur du pneumatique 5 en l'absence de sollicitation extérieure, ou diamètre ID0.

Le fourreau 17 présente en outre une surface intérieure 27 radialement opposée à sa surface extérieure 25. La surface intérieure 27 est généralement cylindrique, et centrée sur l'axe 9 du pneumatique 5.

La surface extérieure 21 de chacun des bords 19 se raccorde à la surface extérieure 25 du fourreau 17 selon un angle droit, en une arête vive. Les surfaces extérieures 21 des bords 19 sont éloignées l'une de l'autre d'une première distance 28 selon la direction axiale de l'enveloppe 13. Cette première distance 28 correspond à la largeur du pneumatique 5 en l'absence de sollicitation extérieure, ou largeur C0.

Par exemple, le sommet 24 présente une hauteur, qui correspond à la demi différence entre le diamètre extérieur OD0 du pneumatique 5 et le diamètre ID0 de celui-ci, voisine de 40 millimètres pour un pneumatique 5 dont la largeur C0 est inférieure, ou égale, à 200 millimètres, et de 50 millimètres pour un pneumatique 5 de largeur C0 supérieure.

Les bords 19 présentent chacun en outre une surface intérieure 29, axialement opposée à leur surface extérieure 21. Cette surface intérieure 29 s'étend généralement de manière radiale. Cette surface intérieure 29 présente ici une faible concavité par rapport au plan radial selon lequel elle s'étend.

La surface intérieure 29 de chacun des bords 19 se raccorde à la surface intérieure 27 du fourreau 17 avec un congé.

La bande 23 comprend une surface extérieure 31 destinée à venir en contact avec le sol. Cette surface extérieure 31 s'étend généralement de manière torique. Le profil de cette surface extérieure 31 suit le profil de la bande 23. La surface extérieure 31 de cette bande 23 se raccorde à la surface extérieure 21 de chacun des bords 19 selon un angle d'environ 120 degrés, en une arête vive. Cet angle de raccordement de la bande 23 aux bords 19 est généralement compris entre 90 et 150 degrés, de préférence entre 120 et 150 degrés.

La bande 23 porte une surface intérieure 33, radialement opposée à sa surface extérieure 31. Cette surface intérieure 33 s'étend généralement de manière homologue à la surface extérieure 31 de la bande 23. La surface intérieure 33 de la bande 23 se raccorde à la surface intérieure 29 de chacun des bords 19, selon un angle d'environ 120 degrés, avec un congé. De préférence, ce congé présente au minimum un rayon de 5 millimètres. L'angle de raccordement de la surface intérieure 33 de la bande 23 à la surface intérieure 29 des bords 19 est comprise entre 90 et 150 degrés, de préférence entre 120 et 150 degrés.

La surface intérieure 29 des bords 19 s'étend généralement de manière parallèle à la surface extérieure 21 de ceux-ci, de la surface intérieure 25 du fourreau 17 à la surface intérieure 33 de la bande 23. Les bords 19 présentent chacun une épaisseur 34 pratiquement constante du fourreau 17 à la bande 23, ou épaisseur FT, au moins en l'absence de sollicitation extérieure.

La bande 23 s'étend essentiellement avec une épaisseur 35 pratiquement constante, d'un bord 19 à l'autre, ou épaisseur TT. Le fourreau 17 s'étend généralement avec une épaisseur 36 pratiquement constante, d'un bord 19 à l'autre, ou épaisseur ST, au moins en l'absence de sollicitation extérieure.

La chambre 15 est délimitée par la surface intérieure 27 du fourreau 17, la surface intérieure 29 de chacun des bords 19 et la surface intérieure 33 de la bande 23. La chambre 15 s'étend jusqu'à proximité des bords 19 où elle suit sensiblement les surfaces extérieures 21 de ces bords 19.

L'épaisseur 34 de ces bords 19 est voisine de l'épaisseur 35 de la bande 23, au moins à 20 pour cent près. L'épaisseur 34 de ces bords 19 est comprise entre 0,8 et 1,2 fois l'épaisseur 35 de la bande 23.

Dans cet agencement, les bords 19 sont capables de réagir à une sollicitation radiale de la bande 23 en se déformant. Cette capacité des bords 19 à se déformer en accompagnant la déformation de la bande 23 améliore les capacités d'auto-nettoyage du pneumatique 5. Cela permet à la bande 23 de se déformer sur toute son étendue, y compris là où elle se raccorde aux bords 19. Dans des pneumatiques classiques au contraire, ce lieu de raccordement présente une rigidité supérieure à celle du reste de la bande de roulement, du fait de la rigidité des bords. Cela empêche la bande de roulement de se déformer à proximité de ces bords. On a alors recours à des grattoirs pour nettoyer cette zone. Ici, l'usage de tels grattoirs n'est pas nécessaire, ou du moins considérablement réduit.

La capacité de déformation des bords 19 résulte d'abord de leur conformation particulière. Cette capacité est augmentée, ou du moins conservée, du fait que les bords 19 et le fourreau 17, au droit de ces bords 19, sont dépourvus chacun d'élément de renfort ou d'armature. En variante, les bords 19, ou du moins l'un d'eux, comprend un élément de renfort ou d'armature compris dans une zone annulaire respective, à profil en forme générale de triangle rectangle isocèle, dont l'angle droit correspond à un raccordement de la surface de jonction 21 du ou des bords latéraux 19 à la surface extérieure 25 du fourreau 17 et dont la longueur des côtés égaux est voisine de 15 millimètres. Cela permet de conférer une certaine rigidité au fourreau 17 sans influencer celle des bords latéraux 19, du moins à proximité de leur raccordement à la bande 23.

Le fourreau 17 comporte une paire de portions annulaires d'un premier type, centrées chacune sur l'axe 9 du pneumatique 5, qui font radialement saillie dans la chambre 15, ou premières saillies 37.

Les premières saillies 37 sont disposées de manière symétrique l'une de l'autre par rapport au plan médian 11. Chaque première saillie 37 se trouve à proximité de l'un des bords 19 selon la direction axiale. Chaque première saillie 37 se trouve à une distance 39 de la surface extérieure 21 d'un bord 19 proximal selon la direction axiale, ou distance A. Cette distance A est considérée au sommet de chaque première saillie 37, ou en une ligne médiane d'une portion de sommet cylindrique. La distance A est typiquement comprise entre 20 et 50 millimètres. Cette distance A peut être fonction de l'épaisseur de l'enveloppe, typiquement augmenter avec cette épaisseur.

Chaque première saillie 37 est plus proche de son bord 19 proximal que de l'autre première saillie 37 selon la direction axiale. Les premières saillies 37 sont délimitées par la surface intérieure 27 du fourreau 17. Les premières saillies 37 présentent ici un profil en forme générale de trapèze isocèle. D'autres profils peuvent être envisagés. Ces premières saillies 37 présentent un sommet 41, formé par une surface cylindrique, centrée sur l'axe 9 du pneumatique 5. Par exemple, les premières saillies 37 présentent une hauteur, qui correspond à la demi différence entre leur diamètre extérieur et le diamètre ID0, voisine de 20 millimètres.

Selon la direction radiale, le sommet 41 des premières saillies 37, ici la surface cylindrique, se termine à une distance 43 de la surface intérieure 33 de la bande 23. Cette distance 43 correspond à un jeu entre les premières saillies 37 et la bande 23 en l'absence de sollicitation extérieure de l'enveloppe 13, ou jeu J0.

Selon l'invention, le fourreau 17 comporte au moins une portion annulaire d'un second type, centrée sur l'axe 9 du pneumatique 5, qui fait radialement saillie dans la chambre 15, ou seconde saillie 45. Axialement, la ou les secondes saillies 45 sont intercalées entre les premières saillies 37. Ici, le fourreau 17 comporte une unique seconde saillie 45, centrée sur le plan médian 11 dans la direction axiale de l'enveloppe 13. Chaque première saillie 37 se trouve plus proche du bord 19 proximal que de la seconde saillie 45 selon la direction axiale de l'enveloppe 13. La ou les secondes saillies 45 peuvent être agencées de manière à agir comme butées, afin de limiter la déformation de la bande 23 selon une direction radiale, en particulier lorsque le pneumatique 5 est sollicité radialement vers l'intérieur. La hauteur des secondes saillies 45 est telle que ces dernières n'entravent pas l'action des premières saillies 37. La hauteur des secondes saillies 45 peut être déterminée de manière telle que celles-ci contribuent à limiter la déformation des bords 19 ou de la bande 23 à proximité de ces bords 19.

Dans l'exemple montré ici, la seconde saillie 45 est conformée de manière analogue aux premières saillies 37. En particulier, la seconde saillie 45 présente un sommet qui se trouve sensiblement au niveau du sommet 41 des premières saillies 37. La seconde saillie 45 peut être conformée de manière différente des premières saillies 37.

La ou les secondes saillies 45 agissent pour ceinturer le fourreau 17 et lui éviter de se décoller du support de rouleau lorsque l'enveloppe 13 est sollicitée. Dans certains cas au moins, cette seconde saillie 45 agit en outre de manière à limiter la déflexion de la bande de roulement 23 lorsque le pneumatique 5 est sollicité radialement vers l'intérieur, ce qui contribue à empêcher l'ouverture du joint formé par l'appui mutuel des surfaces extérieures 21 des bords 19 de deux pneumatiques 5 mutuellement adjacents. Il peut s'agir par exemple d'éviter une déformation trop importante des bords 19, résultant, en particulier, de la combinaison d'une déformation importante de la bande 23 entre les premières saillies 37 et d'un appui de cette bande 23 sur les premières 37.

Le pneumatique 5 comporte en outre une armature noyée dans l'enveloppe 13, qui confère de la rigidité à cette enveloppe 13, du moins en certaines parties de celle-ci. Il s'agit en particulier de répondre à des sollicitations s'exerçant sur la bande 23 et dirigées radialement vers l'intérieur. Les sollicitations de ce type surviennent en particulier lorsque le rouleau 1 sillonne le sol.

L'armature comprend ici un ou plusieurs éléments 47, réalisés ici chacun sous la forme un anneau rigide. Les éléments 47 sont en un matériau plus rigide que celui de l'enveloppe 13, typiquement en acier.

Ici, les éléments 47 de l'armature sont disposés dans le fourreau 17. En particulier, un élément 47 se trouve dans chacune des premières saillies 37. Le pneumatique 5 ne comporte ici aucun autre élément d'armature. Le reste du fourreau 17 est dépourvu d'élément d'armature, en particulier au droit des bords 19.

En variante, l'armature du pneumatique 5 comprend un élément 47 logé dans chaque bord 19, ou du moins l'un d'eux, une zone annulaire respective, à profil en forme générale de triangle rectangle isocèle, dont l'angle droit correspond à un raccordement de la surface de jonction 21 du ou des bords latéraux 19 à la surface extérieure 25 du fourreau 17 et dont la longueur des côtés égaux est voisine de 15 millimètres.

On fait référence à la figure 3.

Le rouleau 1 se trouve à l'état monté. À chacune de ses extrémités, non représentées, le rouleau 1 comprend un flasque, ou une joue, monté sur le support 3. Les flasques serrent les pneumatiques 5, en particulier leurs bords 19, axialement les uns contre les autres, par l'intermédiaire de surfaces de jonction respectives, typiquement les surfaces extérieures 21 décrites en relation avec la figure 2. Un tel serrage empêche, ou du moins limite, la pénétration de terre ou de débris dans le joint, c'est-à-dire entre les surfaces de jonction.

Chaque pneumatique 5 de l'empilement est contraint axialement. En chaque pneumatique 5, le serrage axial qui s'exerce par l'intermédiaire des surfaces de jonction des bords 19 produit une compression axiale du fourreau 17 par rapport à l'état libre de sollicitation (montré en trait tireté). La largeur 28 du pneumatique 5 dans cet état contraint, ou largeur C1, est inférieure à la largeur C0. Typiquement, la largeur C1 est inférieure d'environ 5 pour cent à la largeur C0.

Cet état de contrainte, établi en fin de montage, est maintenu lorsque le rouleau 1 fonctionne. Cet état est sensiblement homogène sur l'ensemble des pneumatiques 5 de l'empilement.

En chaque pneumatique 5, la compression du fourreau 17 provoque une déformation de la bande de roulement, i.e. la bande 23 de la figure 2. La forme bombée du profil de cette bande est plus marquée (plus galbé) qu'à état libre de contrainte (montré en trait tireté). Le diamètre extérieur 26 du pneumatique 5 dans cet état contraint, ou diamètre OD1, est supérieur au diamètre OD0. Le jeu entre les premières saillies 37 et la bande de roulement 23 dans cet état de contrainte, ou jeu J1, est aussi supérieur au jeu J0.

On fait référence à la figure 4.

Lorsque le rouleau 1 travaille, une portion de la bande de roulement 23 des pneumatiques 5 en contact avec le sol s'affaisse vers le fourreau 17, jusqu'à venir en butée contre des portions de celui-ci en saillie dans la chambre 15, typiquement les premières saillies 37 et, ici, la seconde saillie 45. La bande de roulement 23 contacte d'abord les sommets des premières saillies 37, qui sont proches des bords 19 où se raccorde cette bande 23. Le jeu entre les premières saillies 37 et la bande de roulement 23 dans cet état de contrainte est pratiquement nul. La bande de roulement contacte ensuite la seconde saillie 45, qui se trouve en position médiane. Cette seconde saillie 45 fonctionne ici en outre comme une butée. La bande de roulement 23 adopte un profil généralement plat, du fait notamment que les premières saillies 37 et la seconde saillie 45 présentent des hauteurs voisines les unes des autres.

La conformation des bords des pneumatiques 5, typiquement les bords 19 décrits en relation avec la figure 2, permet à la bande de roulement 23 de se déformer (s'affaisser) entièrement, y compris là où elle se raccorde à ces bords 19. Les premières saillies 37 limitent l'ampleur de cet affaissement au voisinage des bords 19. On a conçu des bords 19 qui se déforment avec la bande de roulement 23 tout en contrôlant la déformation de l'ensemble par la présence des premières saillies 37.

À proximité du joint, là où les bords 19 de deux pneumatiques 5 mutuellement adjacent se trouvent en appui mutuel, se trouve une zone interstitielle 49 généralement annulaire, ouverte et dirigée radialement vers l'extérieur. Les zones interstitielles 49 sont représentées remplies de pointillés. Chaque zone interstitielle 49 est délimitée axialement par des portions des bandes de roulement 23 des pneumatiques 5 mutuellement adjacents. Ces portions courent des bords 19 formant le joint à la portion la plus radialement extérieure de la bande de roulement 23, ici le sommet du profil de cette bande.

Par rapport à la zone interstitielle 49 de la figure 3, celle de la figure 4 est pratiquement inexistante. Cela montre qu'au voisinage de la jonction, ou joint, entre deux pneumatiques 5 mutuellement adjacents, la bande de roulement 23 se déforme d'une manière telle que la terre ne peut s'y accumuler. La zone interstitielle 49 au droit du joint s'ouvre lorsque les pneumatiques 5 concernés travaillent, sans que le joint ne s'ouvre.

Les pneumatiques 5 et le rouleau 1 qui résulte de leur montage sur le support tubulaire 3 présentent des capacités autonettoyantes supérieures aux pneumatiques classiques et aux rouleaux équipés de tels pneumatiques.

À titre d'exemple, le tableau ci-après donne des valeurs dimensionnelles pour la réalisation d'un pneumatique 5, ainsi qu'un domaine de valeurs préférentielles.

| | Exemple | Minimum | Maximum |
|---|---|---|---|
| Diamètre ID0 (mm) | 407 | 220 | 611 |
| Largeur C0 (mm) | 250 | 120 | 250 |
| Diamètre OD0 (mm) | 530 | 300 | 800 |
| Jeu J0 (mm) | 13 | 10 | 40 |
| Jeu J1 (mm) | 15 | 12 | 45 |
| Épaisseur FT (mm) | 12 | 8 | 20 |
| Épaisseur TT (mm) | 10 | 8 | 20 |
| Épaisseur ST (mm) | 10 | 8 | 20 |
| Distance A (mm) | 45 | 20 | 50 |

On fait référence à la figure 5.

Elle montre une variante de pneumatique 5 dans laquelle l'enveloppe 13 est pourvue de reliefs élémentaires 51, qui font saillie radialement de la surface extérieure 31 de la bande 23. Ces reliefs 51 forment des exceptions à la forme de révolution de l'enveloppe 13. La présence de ces reliefs 51 augmente localement l'épaisseur de la bande 23, sans modifier l'épaisseur générale 35 constante du reste de cette bande 23.

Les reliefs 51 peuvent être disposés de manière sensiblement équidistante le long de la circonférence du pneumatique 5. Les reliefs 51 améliorent l'adhérence du pneumatique 5, et forment en outre des aspérités dans le fond du sillon. Ici, les reliefs 51 sont conformés en crampons.

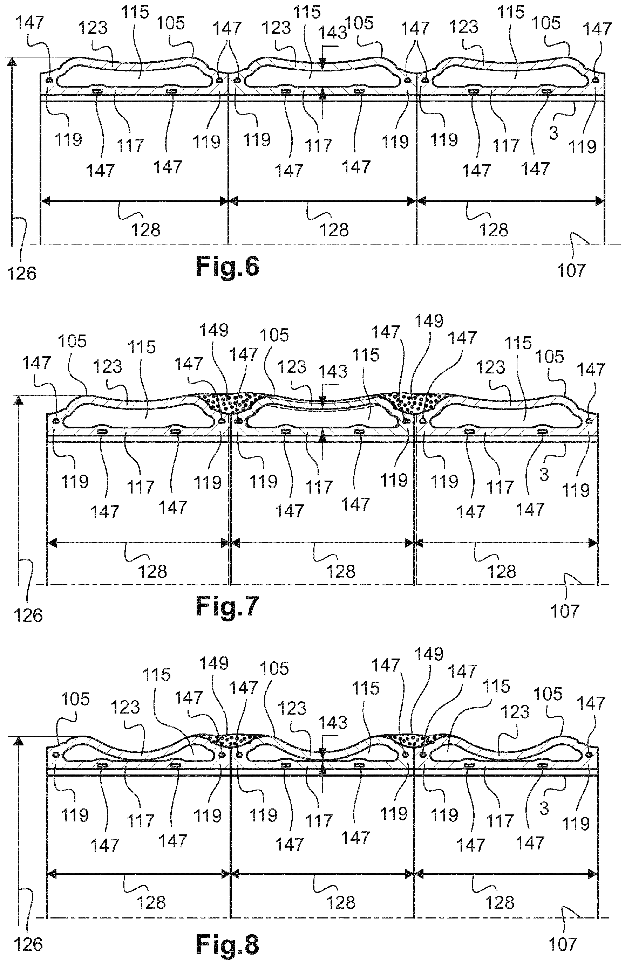

On fait référence aux figures 6 à 8.

Elles montrent un rouleau 1 équipé de pneumatiques 105 de configuration classique. Les éléments de ces pneumatiques classiques 105 fonctionnellement analogues aux pneumatiques 5 décrits plus haut portent des références numériques qui se déduisent de celles des figures 1 à 5 par l'ajout d'une centaine.

Chaque pneumatique classique 105 comporte une bande 123 qui se rattache aux bords de jonction 119. La bande 123 comporte un profil en deux parties, chacune ayant la forme d'un dôme peu accentué.

La distance 143 qui sépare la surface intérieure du fourreau 117 de la surface intérieure de la bande 123, ici au plan médian du pneumatique 105, varie selon l'état de contrainte que subit l'enveloppe : un jeu J100 en l'absence de toute sollicitation extérieure, un jeu J101 lorsque le rouleau 1 est monté et un jeu J102 lorsque la bande 123 est sollicitée axialement vers l'intérieur. Typiquement, le jeu J100 et J101 sont voisins de 40 millimètres, tandis que le jeu J102 est pratiquement nul.

Malgré une déformation d'amplitude plus importante en travail, représentée par la différence des jeux J101 et J102, la zone interstitielle 149 est pratiquement identique sur les figures 7 et 8. Cela résulte notamment de ce que la portion de la bande 123 à proximité des bords 119 ne se déforme pas, ou très peu. Dans les pneumatiques classiques 105, la chambre 115 se termine à distance de la surface extérieure des bords 119 en sorte que ces bords 119 présentent une épaisseur très importante en comparaison de celle de la bande 123. Cette épaisseur importante contribue à rigidifier les bords 119. En outre, un élément 147 de l'armature du pneumatique 105 est disposé dans chacun de ces bords 119, dans une moitié radialement extérieure de ceux-ci.

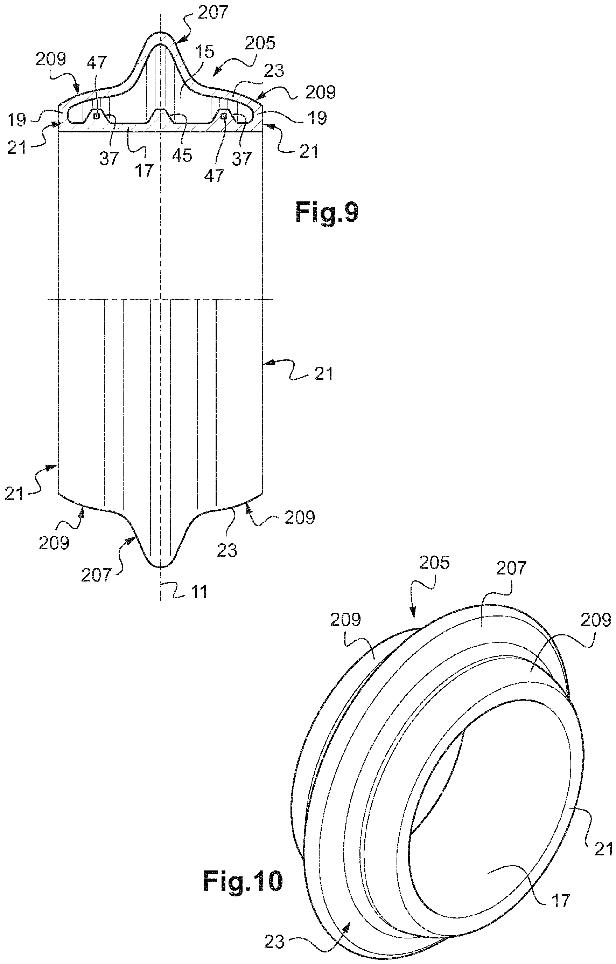

On fait référence aux figures 9 et 10.

Elles montrent une variante de pneumatique 205 dans laquelle la bande de roulement 23 comprend une portion en forme générale de crête 207 et deux portions en forme générale d'épaulement 209 qui relient chacune la portion de crête 207 à un bord 19 respectif. La chambre 15 s'étend radialement dans la portion de crête 207 de la bande de roulement 23, de telle manière que l'épaisseur de la bande de roulement 23 soit sensiblement constante, d'un bord 19 du pneumatique 205 à l'autre.

La bande de roulement 23 présente une concavité de même signe sur chaque portion en épaulement 209, d'un bord 19 à la base proximale de la portion de crête 207. En cette base, la concavité s'inverse pour former un congé par l'intermédiaire duquel chacune des portions en épaulement 209 se raccorde à la portion en crête 207. La portion en forme de crête 207 présente un sommet étroit et des flancs légèrement évasés radialement, c'est-à-dire généralement inclinés par rapport à la direction radiale du pneumatique 205.

Malgré la présence de la portion en crête 207 de la bande de roulement 23, les premières saillies 37 se trouvent à une distance des bords 19 qui est analogue à celle des modes de réalisation des figures 1 à 5. En particulier, ces premières saillies 37 se trouvent à proximité des bords 19, en regard radialement des portions en épaulement 209. Ces premières saillies 37 sont écartées axialement de la portion en crête 207, vers l'extérieur du pneumatique 205.

Le pneumatique 205 comporte ici avec une seconde saillie 45 en zone médiane. Cette seconde saillie est optionnelle.

Le pneumatique 205 est particulièrement adapté à la formation de sillons. Il peut être monté sur un support tubulaire, du type du support 3 par exemple, pour former ce que l'on appelle un rouleau sillonneur dans la technique.

L'invention ne se limite pas aux exemples de pneumatiques décrits ci-avant, seulement à titre d'exemple, mais englobe toutes les variantes que pourra envisager l'homme de l'art. Et en particulier :
- On a décrit une enveloppe 13 dans laquelle les surfaces extérieures 21 des bords 19 sont circulaires. En variante, ces surfaces extérieures 21 s'étendent généralement de manière tronconique, au moins en l'absence de contraintes axiales, en s'évasant selon la direction axialement extérieure du pneumatique 5. Dans ce cas, la surface intérieure 29 des bords 19 suit cette l'inclinaison. En conséquence, l'enveloppe 13 présente une largeur au niveau de la bande de roulement 23 légèrement supérieure à sa largeur au niveau du fourreau 1. Lorsque le pneumatique 5 est contraint axialement, les surfaces extérieures 21 adoptent une configuration plane ou quasi-plane.
- On a décrit une enveloppe 13 dans laquelle la surface intérieure 33 de la bande 23 suit continûment le profil de la bande. En variante, cette surface 33 peut être pourvue d'éléments faisant saillie radialement à l'intérieur de la chambre 15. De tels éléments peuvent fonctionner en tant que butées, à la manière des premières saillies 37 notamment, en remplacement ou en complément de celles-ci. Axialement, ces éléments peuvent être intercalés entre les premières saillies 37. Certains peuvent aussi se trouver en regard de ces premières saillies 37. Dans ce cas, leur hauteur et celle des premières saillies 37 est adaptée pour conserver l'amplitude de déformation de la bande 23.
- On a décrit une seconde saillie 45 agissant à la fois pour ceinturer le fourreau 17 et comme butée pour la bande 23. La forme, en particulier la hauteur, de cette saillie 45 peut être modifiée selon la fonction que l'on attribue à cette saillie 45 ou la déformation visée pour la bande 23. Cette seconde saillie 45 peut comprendre un élément du type des éléments d'armatures 37 disposés dans les premières saillies 7, en particulier pour éviter que le fourreau 17 ne se déforme au montage.
- Quel que soit l'angle selon lequel la bande 23 se raccorde aux bords 19, les portions en saillie dans la chambre 15, en particulier les premières saillies 37 et, le cas échéant, les secondes saillies 45, présentent une hauteur minimale égale à la hauteur des bords 19 de laquelle se déduit l'épaisseur 35 de la bande de roulement 23. Cela permet d'assurer que le joint entre deux pneumatiques 5 mutuellement adjacent ne s'ouvre lorsque ces pneumatiques 5 sont sollicités axialement vers l'intérieur. Dans le cas d'un pneumatique dépourvu de fonction sillonneur, lorsque la bande de roulement 23 présente une concavité de signe constante d'un bord 19 à l'autre ou lorsque la bande de roulement 23 est dépourvue de portion en crête du type de la portion 207 décrite en relation avec la figure 9 par exemple, les portions en saillie présentent une hauteur voisine de la valeur minimale en question. Dans le cas contraire, ces portions en saillie, en particulier au niveau de la portion en crête, présentent une hauteur bien supérieure à la hauteur minimale, dont l'écart avec cette hauteur minimale correspond sensiblement à la profondeur d'un sillon.

## Revendications

1. Pneumatique (5) de rouleau agricole (1) du type comprenant une enveloppe souple (13) délimitant une chambre (15) non gonflable, l'enveloppe souple (13) présentant un fourreau (17) propre à s'adapter autour d'un tube support (3) et possédant une paire de bords latéraux (19) portant chacun une surface de jonction (21) à un pneumatique homologue, ainsi qu'une bande de roulement (23) reliée au fourreau (17), **caractérisé en ce que** la chambre (15) s'étend à proximité de chacun des bords latéraux (19) de manière généralement homologue à la surface de jonction (21) de sorte que les bords latéraux (19) présentent une épaisseur (34) sensiblement constante du fourreau (17) à la bande de roulement (23) et l'enveloppe (13) présente au moins une paire de portions (37) faisant saillie radialement dans la chambre (15), ces portions en saillie (37) étant proches chacune d'un bord latéral (19) respectif, **caractérisé en ce que** l'enveloppe (13) présente au moins une portion supplémentaire (45) faisant saillie radialement dans la chambre (15), cette portion supplémentaire (45) étant intercalée entre les portions en saillie (37) de ladite paire tandis qu'au moins un élément d'armature (47) est disposé dans l'une des portions en saillie (37) de ladite paire.

2. Pneumatique selon la revendication 1 comprenant en outre un ou plusieurs éléments d'armature (47) rigides dans l'enveloppe souple (13), dans lequel les bords latéraux (19) et le fourreau (17), au moins au droit de ces bords latéraux (19), sont chacun dépourvus d'élément de renfort ou d'armature.

3. Pneumatique selon la revendication 1 comprenant en outre un ou plusieurs éléments d'armature (47) rigides dans l'enveloppe souple (13), dans lequel l'un au moins des bords latéraux (19) ou le fourreau (17), au droit d'un des bords latéraux (19), loge un élément de renfort ou d'armature, dans une zone annulaire respective, à profil de triangle rectangle isocèle dont l'angle droit correspond à un raccordement de la surface de jonction (21) d'un bord latéral (19) au fourreau (17) et dont une longueur des côtés égaux est voisine de 15 millimètres.

4. Pneumatique selon l'une des revendications précédentes, dans lequel les portions en saillie (37) de ladite paire sont éloignées l'une de l'autre axialement.

5. Pneumatique selon l'une des revendications précédentes, dans lequel les portions en saillie (37) de ladite paire sont éloignées axialement de la surface de jonction (21) de leur bord latéral (19) respectif d'une distance (39) comprise entre 20 et 50 millimètres.

6. Pneumatique selon l'une des revendications précédentes, dans lequel, en l'absence de sollicitation extérieure, les portions en saillie (37) sont éloignées de la bande de roulement (23) d'une distance comprise entre 10 et 40 millimètres.

7. Pneumatique selon l'une des revendications précédentes, dans lequel, en présence de sollicitation exercée radialement vers l'intérieur sur la bande de roulement (23), la bande de roulement (23) s'affaisse jusqu'à venir buter contre certaines au moins des portions en saillie (37).

8. Pneumatique selon l'une des revendications précédentes, dans lequel la bande de roulement (23) présente un profil en dôme.

9. Pneumatique selon l'une des revendications précédentes, dans lequel la bande de roulement (23) présente une concavité de même signe d'un bord latéral (19) à l'autre.

10. Pneumatique selon l'une des revendications précédentes, dans lequel ladite épaisseur (34) correspond à une épaisseur générale (35) de la bande de roulement (23) à 20 pour cent près.

11. Pneumatique selon la revendication 1, dans lequel la portion supplémentaire (45) présente une hauteur sensiblement identique à une hauteur des portions en saillie (37) de ladite paire.

12. Rouleau agricole comprenant un support généralement tubulaire (3) et une pluralité de pneumatiques selon l'une des revendications précédentes montée sur ce support (3).

## Patentansprüche

1. Reifen (5) einer landwirtschaftlichen Walze (1) vom Typ, der einen flexiblen Mantel (13) umfasst, der eine nicht aufblasbare Kammer (15) begrenzt, wobei der flexible Mantel (13) eine Hülle (17) aufweist, die geeignet ist, um ein Stützrohr (3) herum zu passen, und ein Paar seitliche Kanten (19) aufweist, die jeweils eine Verbindungsfläche (21) zu einem homologen Reifen sowie eine Lauffläche (23), die mit der Hülle (17) verbunden ist, tragen, **dadurch gekennzeichnet, dass** sich die Kammer (15) bis in die Nähe jeder der seitlichen Kanten (19) im Allgemeinen homolog zur Verbindungsfläche (21) erstreckt, so dass die seitlichen Kanten (19) eine von der Hülle (17) bis zur Lauffläche (23) im Wesentlichen konstante Dicke (34) aufweisen und der Mantel (13) mindestens ein Paar Abschnitte (37) aufweist, die radial in die Kammer (15) vorstehen, wobei diese vorstehenden Abschnitte (37) jeweils nahe an einer jeweiligen seitlichen Kante (19) liegen, **dadurch gekennzeichnet, dass** der Mantel (13) mindestens einen zusätzlichen Abschnitt (45) aufweist, der radial in die Kammer (15) vorsteht, wobei dieser zusätzliche Abschnitt (45) zwischen den vorstehenden Abschnitten (37) des Paares angeordnet ist, während mindestens ein Bewehrungselement (47) in einem der vorstehenden Abschnitte (37) des Paares angeordnet ist.

2. Reifen nach Anspruch 1, der ferner ein oder mehrere starre Bewehrungselemente (47) in dem flexiblen Mantel (13) umfasst, wobei die seitlichen Kanten (19) und die Hülle (17) zumindest im rechten Winkel zu diesen seitlichen Kanten (19) jeweils frei von Verstärkungs- oder Bewehrungselementen sind.

3. Reifen nach Anspruch 1, der ferner ein oder mehrere starre Bewehrungselemente (47) in dem flexiblen Mantel (13) umfasst, wobei in mindestens einer der seitlichen Kanten (19) oder der Hülle (17) im rechten Winkel zu einer der seitlichen Kanten (19) in einem jeweiligen ringförmigen Bereich ein Verstärkungs- oder Bewehrungselement mit einem gleichschenkligen rechtwinkligen Dreiecksprofil aufgenommen ist, dessen rechter Winkel einem Anschluss der Verbindungsfläche (21) einer seitlichen Kante (19)an die Hülle (17) entspricht und dessen Länge der gleichen Seiten etwa 15 Millimeter beträgt.

4. Reifen nach einem der vorhergehenden Ansprüche, wobei die vorstehenden Abschnitte (37) des Paares axial voneinander beabstandet sind.

5. Reifen nach einem der vorhergehenden Ansprüche, wobei die vorstehenden Abschnitte (37) des Paares von der Verbindungsfläche (21) ihrer jeweiligen seitlichen Kante (19) um einen Abstand (39) zwischen 20 und 50 Millimetern axial beabstandet sind.

6. Reifen nach einem der vorhergehenden Ansprüche, wobei die vorstehenden Abschnitte (37) bei fehlender äußerer Belastung um einen Abstand zwischen 10 und 40 Millimetern von der Lauffläche (23) beabstandet sind.

7. Reifen nach einem der vorhergehenden Ansprüche, wobei bei einer radial nach innen auf die Lauffläche (23) ausgeübten Belastung die Lauffläche (23) durchhängt, bis sie an zumindest bestimmten vorstehenden Abschnitten (37) zum Anliegen kommt.

8. Reifen nach einem der vorhergehenden Ansprüche, wobei die Lauffläche (23) ein gewölbtes Profil aufweist.

9. Reifen nach einem der vorhergehenden Ansprüche, wobei die Lauffläche (23) eine Konkavität mit dem gleichen Zeichen von einer seitlichen Kante (19) zur anderen aufweist.

10. Reifen nach einem der vorhergehenden Ansprüche, wobei die Dicke (34) um 20 Prozent genau einer allgemeinen Dicke (35) der Lauffläche (23) entspricht.

11. Reifen nach Anspruch 1, wobei der zusätzliche Abschnitt (45) eine Höhe aufweist, die im Wesentlichen mit einer Höhe der vorstehenden Abschnitte (37) des Paares identisch ist.

12. Landwirtschaftliche Walze, umfassend einen im Allgemeinen rohrförmigen Träger (3) und eine Mehrzahl von Reifen nach einem der vorhergehenden Ansprüche, die auf diesem Träger (3) montiert sind.

## Claims

1. A tyre (5) of an agricultural roller (1) of the type comprising a flexible casing (13) delimiting a non-inflatable chamber (15), the flexible casing (13) having a sheath (17) adapted to fit around a support tube (3) and having a pair of side edges (19) each bearing a junction surface (21) to a homologous tyre, as well as a tread (23) connected to the sheath (17), **characterised in that** the chamber (15) extends proximate to each of the side edges (19) in a manner generally homologous to the junction surface (21) so that the side edges (19) have a substantially constant thickness (34) from the sheath (17) to the tread (23) and the casing (13) has at least one pair of portions (37) projecting radially into the chamber (15), each of these projecting portions (37) being close to a respective side edge (19), **characterised in that** the casing (13) has at least one additional portion (45) projecting radially into the chamber (15), this additional portion (45) being interposed between the projecting portions (37) of said pair whereas at least one framework element (47) is disposed in one of the projecting portions (37) of said pair.

2. The tyre according to claim 1, further comprising one or more rigid framework element(s) (47) in the flexible casing (13), wherein each of the side edges (19) and the sheath (17), at least at right angles to these side edges (19), is devoid of reinforcement or framework element.

3. The tyre according to claim 1, further comprising one or more rigid framework element(s) (47) in the flexible casing (13), wherein at least one of the side edges (19) or the sheath (17), at right angles to one of the side edges (19), accommodates a reinforcement or framework element, in a respective annular area, with an isosceles right-angled triangle profile whose right angle corresponds to a connection of the junction surface (21) of a side edge (19) to the sheath (17) and a length of the equal sides of which is close to 15 millimetres.

4. The tyre according to one of the preceding claims, wherein the projecting portions (37) of said pair are axially away from one another.

5. The tyre according to one of the preceding claims, wherein the projecting portions (37) of said pair are axially away from the junction surface (21) of their respective side edge (19) by a distance (39) comprised between 20 and 50 millimetres.

6. The tyre according to one of the preceding claims, wherein, in the absence of any external stress, the projecting portions (37) are away from the tread (23) by a distance comprised between 10 and 40 millimetres.

7. The tyre according to one of the preceding claims, wherein, in the presence of a stress exerted radially inwards on the tread (23), the tread (23) sags until abutting against at least some of the projecting portions (37).

8. The tyre according to one of the preceding claims, wherein the tread (23) has a dome-like profile.

9. The tyre according to one of the preceding claims, wherein the tread (23) has a concavity of the same sign from one side edge (19) to another.

10. The tyre according to one of the preceding claims, wherein said thickness (34) corresponds to a general thickness (35) of the tread (23) within a 20 percent margin.

11. The tyre according to claim 1, wherein the additional portion (45) has a height substantially identical to a height of the projecting portions (37) of said pair.

12. An agricultural roller comprising a generally tubular support (3) and a plurality of tyres according to one of the preceding claims mounted on this support (3) .
